# EUROPEAN PATENT APPLICATION

(11) **EP 1 116 632 A2**
(43) Date of publication of application: **18.07.2001**
(21) Application number: 00128733.3
(22) Date of filing: 29.12.2000
(51) Int. Cl.: B60R 22/00

(54) **Antifriction protective device applicable to vehicle safety belts**

(30) Priority: 11.01.2000 IT PD000003 U
(71) Applicant: Frasson, Franco, 35018 San Martino di Lupari (Prov. of Padova) (IT)
(72) Inventor: Frasson, Franco, 35018 San Martino di Lupari (Prov. of Padova) (IT)
(74) Representative: Modiano, Guido, Dr.-Ing.

(57) **Abstract**

An antifriction protective device (10) applicable to vehicle safety belts (11), comprising a flat tubular body (12) which can be opened by way of reversible closure means; the body has an internal surface (13) adapted to provide a contact with the safety belt (11) which has a lower friction coefficient than contact between a corresponding portion of the outer surface of the body and the clothing of the user.

## Description

The present invention relates to an antifriction protective device which can be applied to vehicle safety belts.

It is known that in most developed countries accident-prevention safety standards related to vehicle traffic currently require the driver and the passengers to use so-called safety belts.

A vehicle safety belt is constituted by a band, usually made of synthetic fabric or the like, which is rigidly coupled, in the case of a so-called "lap-shoulder" belt for front seats, by means of one end to a region of the body of the vehicle which is usually the door post at a height which substantially corresponds to the portion between the shoulders and the head of the user.

Another end is instead fixed to the base of the post, and a male element can slide on an intermediate portion and can engage a female element in another region of the body, for example the intermediate base region between the two front seats, across the seat.

There are also simple lap belts, which have a fixed end and an engageable one.

It is by now evident from many tests that safety belts excellently perform the task of limiting injury due to vehicle accidents especially in case of head-on impact.

However, their use can have "unpleasant" aspects for the user.

In particular, if the user, whether driver or passenger, wears clothing made of a particularly delicate fabric, the rubbing of the belt against such clothing, particularly in the shoulder region, can wear the clothing (in terms of loss of original color and consistency) and sometimes even cause actual damage to it (cuts, tears, etcetera).

The aim of the present invention is to provide an antifriction protective device which solves the drawback related to damage and wear of clothing made of particularly delicate fabric due to friction against safety belts.

Within the scope of this aim, an object of the present invention is to provide a device which in no case detracts from the overall functional effectiveness of the belts.

Another object is to provide a device which is particularly flexible in application and can optionally be easily applied or removed directly by the user.

Another object is to provide a device which can also be applied to belts which are already fitted to the vehicle.

Another object of the present invention is to provide a device which can be manufactured with conventional equipment and technologies.

This aim and these and other objects which will become better apparent hereinafter are achieved by an antifriction protective device applicable to vehicle safety belts, characterized in that it comprises a flat tubular body which can be opened by way of reversible closure means, said body having an internal surface adapted to provide a contact with the safety belt which has a lower friction coefficient than contact between a corresponding portion of the outer surface of said body and the clothing of the user.

Further characteristics and advantages of the present invention will become better apparent from the following detailed description of an embodiment thereof, illustrated only by way of non-limitative example in the accompanying drawings, wherein:
Figure 1 is a perspective view of a device according to the present invention;
Figure 2 is a perspective view of a device during application;
Figure 3 is a further perspective view of the device of Figure 1 during application;
Figure 4 is a partially sectional view of the device of Figure 1;
Figure 5 is another view of the device of Figure 1.

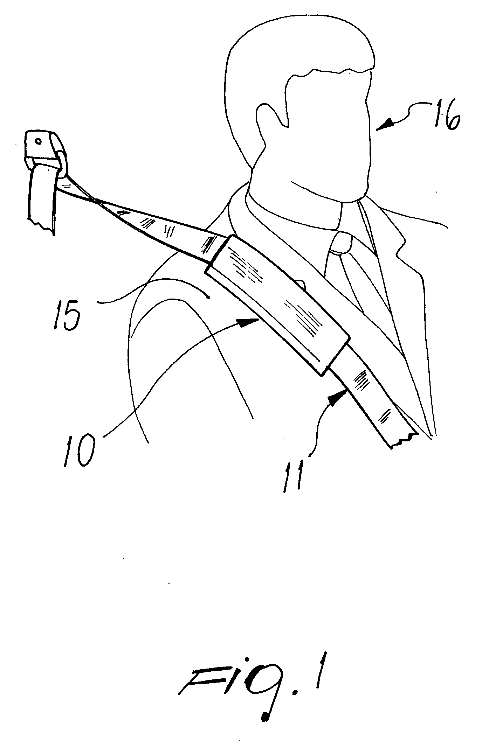

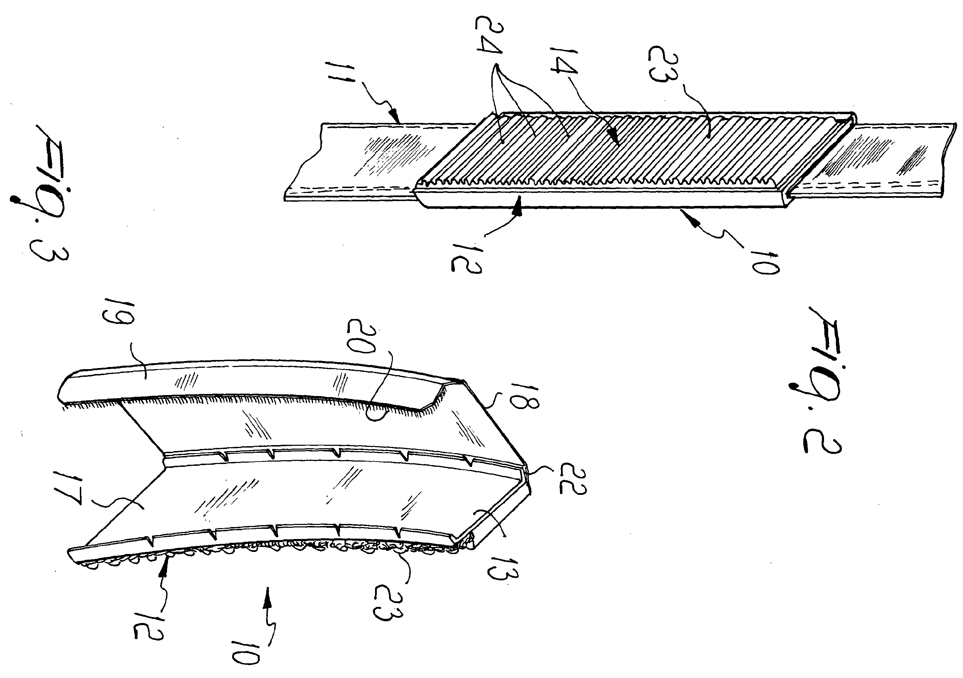

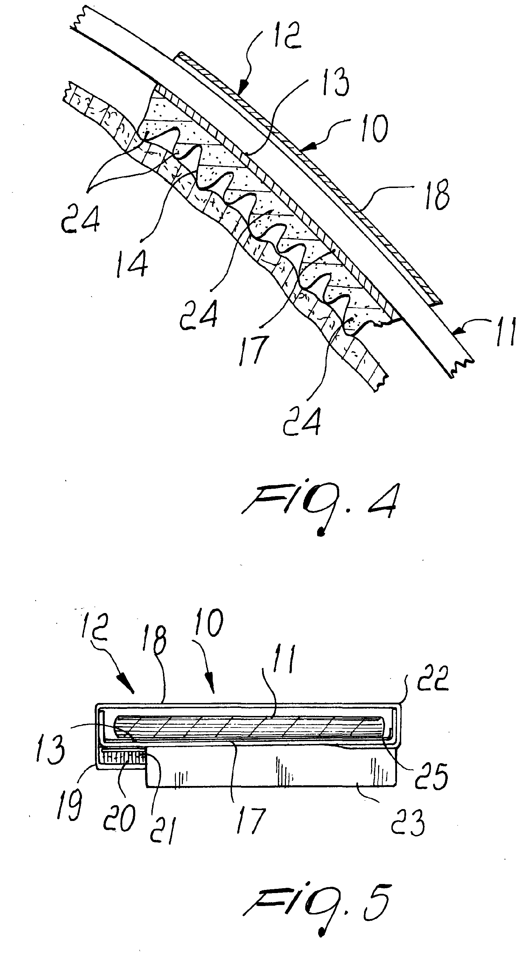

With reference to Figures 1 to 5, an antifriction protective device according to the present invention is generally designated by the reference numeral 10.

The device 10 can be applied to vehicle safety belts.

In particular, in this case it is applied to a belt which is generally designated by the reference numeral 11.

The device 10 comprises a flat tubular body 12 which can be opened along one edge by way of reversible closure means.

The body has an internal surface 13 adapted to provide a contact with the belt 11 which has a lower friction coefficient than contact between a corresponding outer portion 14 of the body 12 and the clothing 15 of the user, generally designated by the reference numeral 16.

In particular, in this case, the body 12 comprises a concave part 17, to which a closure cover 18 is applied; the cover is articulated about one edge and has a flap 19 provided with reversible closure means constituted by a tape 20, made of a material commonly known as Velcro, which can be applied to a complementary tape 21 of non-woven fabric which is applied in a corresponding portion of said concave part 17.

The concave part 17 and the cover 18, in this case, are glued together and the latter is articulated to the former by means of a longitudinal pre-fold 22.

The portion 14 is constituted, in this case, by a layer 23 with a studded surface which has a high friction coefficient.

More specifically, the layer 23 has a plurality of parallel studs 24 arranged transversely to the longitudinal extension of the body.

In this case, the layer 23 is advantageously made of soft PVC (polyvinyl chloride).

The body 12 is internally covered with a film 25 which has a low friction coefficient and is advantageously made of textile material on a PVC backing.

In practice it has been observed that the present invention has achieved the intended aim and objects.

In particular, attention is drawn to the easy application of the device according to the present invention, which ensures contact with substantially no sliding between itself and the user's clothing, while it allows the belt inserted therein to slide freely.

It should be noted that the device according to the invention can be applied easily and rapidly even by the user, who can also just as easily remove it if he no longer needs it.

It should also be observed that the device is highly flexible in application, since it can also be associated with belts that are already commercially available.

Conveniently, it should also be noted that the constructive simplicity of the device allows to use it in various conditions of application.

The technical details can be replaced with other technically equivalent elements, and the materials and the dimensions may be any according to requirements.

The disclosures in Italian Utility Model Application No. PD2000U000003 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An antifriction protective device applicable to vehicle safety belts, characterized in that it comprises a flat tubular body which can be opened by way of reversible closure means, said body having an internal surface adapted to provide a contact with the safety belt which has a lower friction coefficient than contact between a corresponding portion of the outer surface of said body and the clothing of the user.

2. The device according to claim 1, characterized in that said body comprises a concave part to which a laterally-hinged cover is applied, said cover having, at its end, means for reversible closure with a corresponding portion of the concave part.

3. The device according to claim 2, characterized in that said reversible closure means are constituted by a tape of material commonly known as Velcro which is fixed to the end of said cover and can couple to a complementary tape of non-woven fabric which is applied in the corresponding portion of the concave part.

4. The device according to one or more of the preceding claims, characterized in that said concave part and said cover are mutually rigidly coupled, said cover being articulated to the concave part by way of a longitudinal pre-fold.

5. The device according to claim 1, characterized in that said outer surface portion is constituted by a layer having a studded surface with a high friction coefficient.

6. The device according to claim 5, characterized in that said layer has a plurality of parallel studs which are arranged transversely to the longitudinal extension of said body.

7. The device according to one or more of the preceding claims, characterized in that said outer surface portion is made of soft PVC.

8. The device according to one or more of the preceding claims, characterized in that said flat tubular body is entirely covered with a film of material having a low friction coefficient.

9. The device according to claim 8, characterized in that said film is made of textile material on a PVC backing.
